# EUROPEAN PATENT SPECIFICATION

(11) **EP 0 812 073 B1**
(45) Date of publication and mention of the grant of the patent: **08.09.1999**
(21) Application number: 97108910.7
(22) Date of filing: 03.06.1997
(51) Int. Cl.: H04B 7/26, H04Q 7/30

(54) **Improvements in or relating to telecommunication systems**
Verbesserungen in oder bezüglich Telekommunikationssystemen
Améliorisations dans ou relatives à des systèmes de télécommunication

(30) Priority: 04.06.1996 US 18959 P
(43) Date of publication of application: 10.12.1997
(73) Proprietor: TEXAS INSTRUMENTS INCORPORATED, Dallas Texas 75265 (US)
(72) Inventor: Eilts, Henry S., Plano, TX 75025 (US)
(74) Representative: Schwepfinger, Karl-Heinz, Dipl.-Ing.

(56) References cited:
- EP-A- 0 626 769
- US-A- 5 430 731
- US-A- 5 473 668
- IEEE COMMUNICATIONS MAGAZINE, vol. 33, no. 5, 1 May 1995, pages 62-68, XP000518772 KENNEDY J ET AL: "DIRECTION FINDING AND "SMART ANTENNAS" USING SOFTWARE RADIO ARCHITECTURES"

## Description

### FIELD OF THE INVENTION

The present invention relates to telecommunication systems and, more specifically, to a method of accommodating delays introduced into a mobile cellular telecommunication system due to preprocessing of the received signals at the base station.

### BACKGROUND OF THE INVENTION

In time division multiple access (TDMA) cellular telecommunication systems, particularly as used in the United States (IS-54 and IS-136), each mobile telephone is assigned time slots in which to send digitally modulated radio frequency (RF) data bursts. To perform properly, it is vital that the data bursts from the mobile telephone arrive at the base station at the correct time (i.e., in the correct time slots, without overlap into the preceding or succeeding time slots). Several mechanisms are presently in place in the standards and protocols to insure that this problem is avoided.

Two principal prior art methods are in the standards to facilitate the proper timing of the data burst transmissions. First, an equalization/timing sequence (commonly called the sync word) is transmitted in each RF data burst in addition to the data. The receivers at the base station determine the exact time of arrival of the sync word (and hence the entire data burst) by means of correlation of a locally generated sequence (i.e., generated at the base station) with the received sequence. After determining the timing error, the base station sends timing correction information to the mobile telephone. The mobile telephone then corrects its transmit timing. In this manner, the timing error is maintained at an acceptably small value. This mechanism is accomplished to correct for timing advances or delays caused by motion of the mobile user.

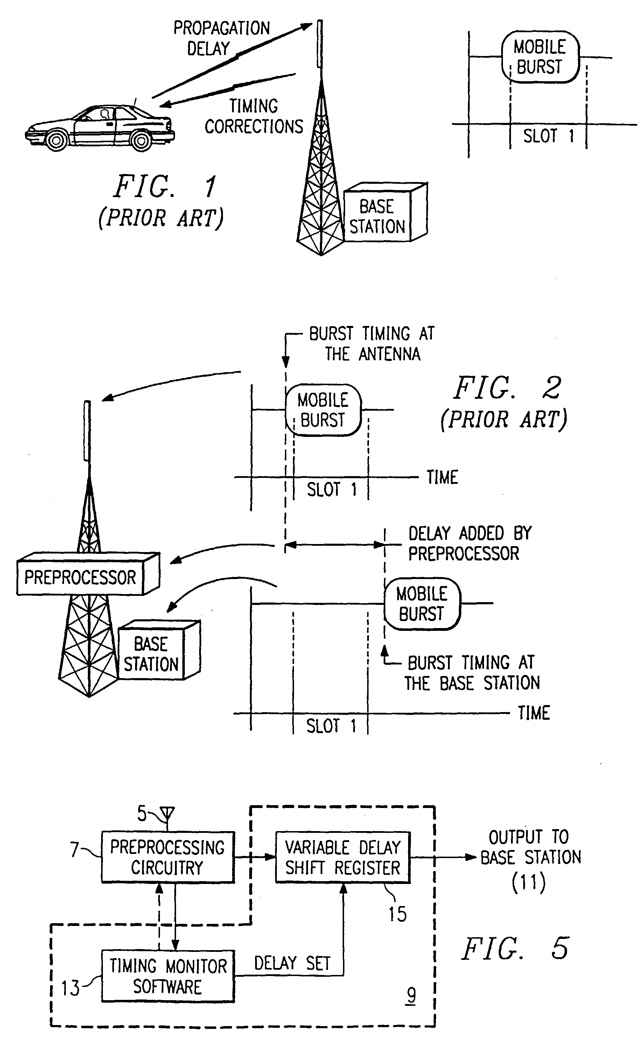

The second prior art method in the standards is provided to accommodate the initial transmission of the mobile telephone. At the first transmission of the mobile telephone, there have been no previous timing corrections from the base station, and the mobile telephone has only a coarse estimate of proper transmit timing. Therefore, its initial transmission can have considerable timing error. The timing error in the initial transmissions can be large enough to cause the data burst received at the base station to overlap into preceding or subsequent time slots, thus interfering with other telephone conversations. To prevent this from occurring, the initial transmission is made with a shortened burst containing multiple repetitions of the sync word in a unique sequence. The burst is shortened to allow for greater timing error without the possibility of overlap into adjacent time slots. The unique sequence of sync words is provided so that the base station can determine the arrival time of the data burst without ambiguity and without extensive searching for a received sync word. The base station determines the arrival timing of the initial transmission and sends timing corrections back to the mobile telephone to be implemented as in the previous description. Once initial timing corrections are made, remaining transmissions from the mobile telephone proceed with normal (i.e., not shortened) data bursts. Thus, the initial transmissions of the mobile telephone as well as subsequent transmissions are assured of arriving at the base station totally within the correct time slots. This mechanism is essential to avoid simultaneous arrivals of multiple mobile signals (collisions) at the base station. A diagram of the above described prior art procedure is set forth in FIGURE 1.

In some applications, it is desired to preprocess the signals received at the base station in a separate processor prior to feeding the signals to the base station electronics. One such application is known as "smart" or signal processing antenna. In this arrangement, the antenna processing is placed in the signal path between the base station antenna elements and the base station electronics signal inputs. The placement of the antenna processing in this position adds delay to the signals, thus causing the arrival times of the processed signals at the base station electronics to be in error by the amount of the processing delay, in addition to error of the type discussed above with reference to FIGURE 1. Very short preprocessing delays (i.e. a small fraction of a slot time) can be handled as an error and corrected as a part of the error correction as discussed above with regard to FIGURE 1. However, if the delay becomes larger (i.e, of the order of one tenth of a slot time or greater), such a large delay cannot be handled by the error correction discussed in conjunction with FIGURE 1 and requires a different approach because a large preprocessing delay precludes the base station from making an arrival time measurement. Accordingly, if such delays are permitted to exist, the base station cannot make a correct timing measurement of the type discussed above with reference to FIGURE 1 and the system will fail. This problem is depicted by the diagram in FIGURE 2.

### SUMMARY OF THE INVENTION

In accordance with the present invention, there is provided a solution to the problem as described hereinabove without disturbing the normal timing mechanism of the base station or requiring any reprogramming of the base station software.

Briefly, the signalling structure in the mobile telecommunication system is organized into consecutive, non-overlapping frames, each frame having the same predetermined time duration. Each frame is broken down into a predetermined number of consecutive non-overlapping time slots. The base station receives the RF data bursts from the cellular mobile telephone as in the prior art and the base station electronics measures the times of arrival of the digital data bursts on a time slot basis as in the prior art for each time slot and transmits timing correction data back to each mobile telephone as in the prior art. In other words, a measurement of data burst arrival time is made during each time slot and timing corrections are derived at the base station and transmitted back to the originating mobile telephone.

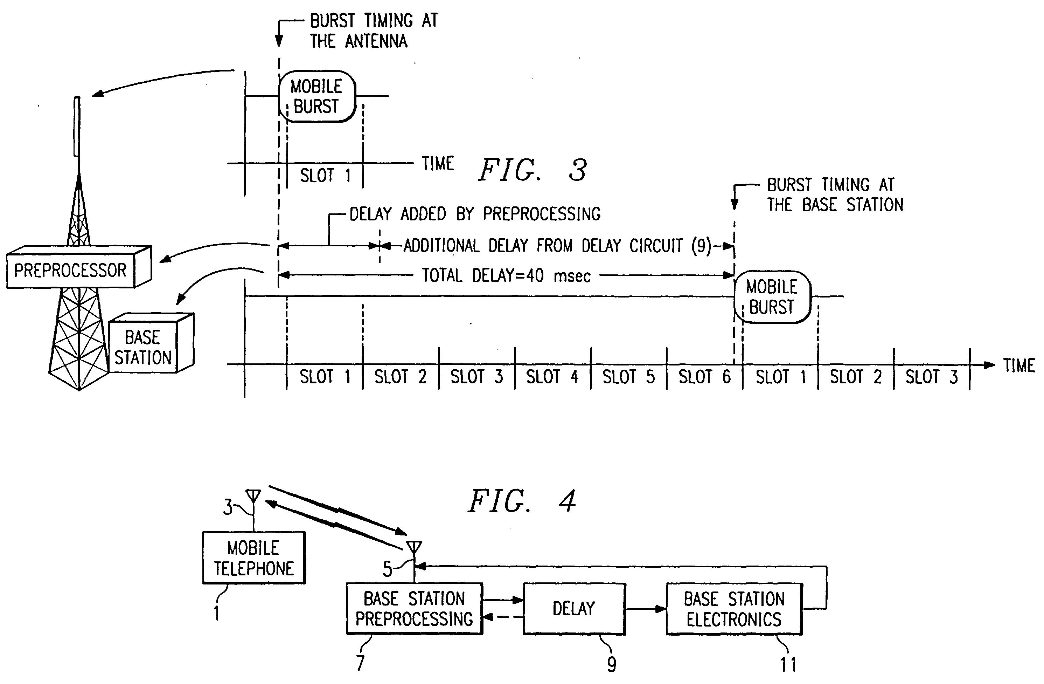

In order to accomplish the above, it is necessary that the delay introduced by the preprocessing circuitry be compensated for. This is accomplished by providing additional delay circuitry between the preprocessing circuitry and the base station electronics to provide the complement of the delay caused by the preprocessing circuitry and a frame time (i.e, the delay in the preprocessing circuitry plus the delay from the delay circuit is equal to an integral number of frame times). This is shown in FIGURE 4. The time delay of the preprocessing circuitry can be fixed, in which case the time delay of the delay circuitry is fixed. The time delay of the preprocessing circuitry can also be variable, changing in response to the signals at the preprocessor inputs, in which case the time delay of the delay circuitry is made variable, preferably on-line. In the case of variable delay, the delay circuitry includes circuitry and/or software to monitor the time delay introduced by the preprocessing circuitry and adjust the delay in the delay circuit in accordance with the monitored delay in the preprocessing circuitry. The changes in time delay through the preprocessing circuitry can be caused by code accompanying a change in the data entering the base station antenna (i.e., in response to the type of signal (e.g., noisy, not noisy, etc.) entering the base station antenna). Thus, the burst transmission of a given mobile telephone arrives at the base station electronics in the proper slot and with the proper timing relative to the slot, albeit with a time delay of an integral number of full frames (i.e., one or more). Since the base station makes measurements on a time slot basis, the base station is unaware of the delay and computes the timing corrections as if there were no additional delay, which is the desired result.

It can be seen that, in accordance with the circuitry and procedure as described above, preprocessing with built in delay can be provided without disturbing the normal timing mechanism of the base station or reprogramming of the base station software. The system continues to operate as in the prior art with timing correction available and in use as described above in connection with FIGURE 1.

### BRIEF DESCRIPTION OF THE DRAWINGS

The present invention will now be further described, by way of example, with reference to the accompanying drawings in which:-
FIGURE 1 is a schematic diagram showing timing correction in cellular mobile telecommunication systems in accordance with the prior art;
FIGURE 2 is a schematic diagram showing how delay is introduced into the signals received at the base station due to preprocessing between the base station antenna and base station electronics in accordance with the prior art;
FIGURE 3 is a schematic diagram showing a procedure in accordance with the present invention for compensation for the added delay due to preprocessing;
FIGURE 4 is a block diagram showing a cellular telecommunication base station with circuitry to provide compensation in accordance with the present invention; and
FIGURE 5 is a block diagram showing a preferred delay circuit which can be used in accordance with the present invention.

### DESCRIPTION OF THE PREFERRED EMBODIMENT

Referring to FIGURES 3 and 4, initially the signalling structure is organized into 40 millisecond frames, each frame having six time slots of 6.67 milliseconds as shown in FIGURE 3. The mobile telephone 1 (FIGURE 4) then transmits an initial RF data burst via its antenna 3 as in the prior art having a time duration of no more than 6.67 milliseconds. This signal burst is received at the base station antenna 5 and preprocessed in the base station preprocessing circuitry as in the prior art to introduce a preprocessing delay which is known or which can be determined.

A delay circuit 9 is provided between the base station preprocessing circuitry 7 and the base station electronics 11. The delay circuit 9 adds delay to the output of the base station preprocessing circuitry so that the sum of the delay introduced by the base station preprocessing circuitry and the delay added by the delay circuit 9 is an integral number of full frames (i.e., one or more), in this case a multiple of 40 milliseconds.

The delay introduced by the delay circuit 9 can be fixed if it is known that the base preprocessing circuitry 7 will always introduce the same delay. If the delay introduced by the base station preprocessing circuitry is variable, the delay circuitry 9 is designed to continually monitor the delay introduced by the base station preprocessing circuitry on-line and continually alter the delay introduced by the delay circuitry to compensate for the delay of the preprocessing circuitry. In this way, a total delay amounting to a time equal to an integral number of frames is always provided. In a digital signal processing (DSP) based preprocessor 7, the variable delay can be monitored, for example, by monitoring the individual preprocessing tasks being performed and by a priori timing measurements of these individual tasks. The monitor software keeps an itemized list of the tasks performed and a running total of the accumulated preprocessing delay time for each data burst processed. When the preprocessing for a burst is completed, the running total is used to set the delay time in the delay circuitry 9. The result is that the output of the delay circuitry 9 is identical in time to what it would have been without the base preprocessing circuitry 7 being present except that it is delayed an integral number of frames. In this way, the base station electronics can determine the timing error of the incoming data bursts from the mobile telephone 1 as in the prior art and transmit the timing correction required back to the mobile telephone 1 as described above with reference to FIGURE 1.

A circuit of the type described is shown in FIGURE 5 where timing monitor software 13 is provided to oversee the preprocessing tasks and keep track of the preprocessing time. The output of the preprocessing circuitry is fed to a shift register with variable delay 15. After a burst is preprocessed, the timing monitor computes preprocessing delay and sets the delay of the shift register 15 equal to the frame complement of the preprocessing delay. The frame complement is the smallest integer frame time minus the calculated delay such that the frame complement is a positive number.

Another possibility for variable delay control involves the injection of a timing signal at the start of the preprocessing and the measurement of the time at which the timing signal exits the preprocessor.

Though the invention has been described with reference to a specific preferred embodiment thereof, many variations and modifications within the scope of the claims will immediately become apparent to those skilled in the art.

## Claims

1. A telecommunication system comprising;
a base station arranged for receiving data bursts during consecutive frames, each of said frames being of predetermined frame period, each said frame being divided into a plurality of portions of predetermined period, said base station including an antenna (5), base station electronics (11) and preprocessing circuitry (7) disposed between said base station antenna and said base station electronics; and
delay circuitry (9) coupled between said preprocessing circuitry (7) and said base station electronics (11), said delay circuitry being arranged to provide the complement of a total time delay to said data bursts through said preprocessing circuitry (7) such that the total time delay in said preprocessing circuitry plus said delay circuitry (9) is equal to an integral number of said predetermined period of a frame.

2. The system of Claim 1, wherein a time delay of said preprocessing circuitry (7) is fixed and a time delay of said delay circuitry is fixed.

3. The system of Claim 1, wherein a time delay of said preprocessing circuitry (7) is variable and a time delay of said delay circuitry is variable.

4. The system of Claim 3 further comprising; means forming a part of said delay circuitry (9) to monitor the time delay provided by said preprocessing circuitry (7) and to adjust the delay in said delay circuit (9) in accordance with the monitored delay in said preprocessing circuitry.

5. A method for accommodating processing delays in a cellular base station comprising the steps of:
receiving data bursts during consecutive frames at a base station of a telecommunications system, each of said frames being of predetermined frame period, each said frame being divided into a plurality of portions of predetermined period, said base station having an antenna (5), base station electronics (11) and preprocessing circuitry (7) disposed between said base station antenna and said base station electronics;
determining the delay introduced by said preprocessing circuitry; and
providing the complement of a total time delay to said data bursts through said preprocessing circuitry such that the total time delay from said preprocessing circuitry plus delay circuitry is equal to an integral number of said predetermined period of a frame.

6. The method of Claim 5, wherein a time delay of said preprocessing circuitry is fixed and said complement is fixed.

7. The method of Claim 5, wherein a time delay of said preprocessing circuitry is variable and said complement is variable.

8. The method of Claim 7 further comprising the step of monitoring the delay provided by said preprocessing circuitry and adjusting said complement in accordance with the monitored delay in said preprocessing circuitry.

9. The method of Claims 5 or Claim 7 or Claim 8, wherein said step of determining said delay comprises the steps of providing a variable delay circuit, determining the delay of said preprocessing circuitry and setting the delay of said variable delay circuit responsive to determination of the delay of said preprocessing circuitry.

## Patentansprüche

1. Telekommunikationssystem mit
einer Basisstation, die Datenblöcke während aufeinanderfolgender Rahmen empfangen kann, von denen jeder eine vorherbestimmte Rahmendauer aufweist und in mehrere Abschnitte von vorherbestimmter Dauer unterteilt ist, wobei die Basisstation eine Antenne (5), eine Basisstation-Elektronik (11), eine Vorverarbeitungsschaltungsanordnung (7), die zwischen der Antenne der Basisstation und der Basisstation-Elektronik sitzt, und
eine Verzögerungsschaltung (9) umfaßt, die zwischen die Vorverarbeitungsschaltungsanordnung (7) und die Basisstation-Elektronik (11) geschaltet ist, wobei die Verzögerungsschaltungsanordnung so ausgebildet ist, daß sie das Komplement einer gesamten Zeitverzögerung der Datenblöcke durch die Verzögerungsschaltungsanordnung (7) liefern kann, so daß die gesamte in der Vorverarbeitungs- und der Verzögerungsschaltungsanordnung erfolgende Zeitverzögerung einem ganzzahligen Vielfachen der vorherbestimmten Rahmendauer entspricht.

2. System nach Anspruch 1, bei dem eine Zeitverzögerung durch die Vorverarbeitungsschaltungsanordnung (7) und eine Zeitverzögerung durch die Verzögerungsschaltungsanordnung festgelegt sind.

3. System nach Anspruch 1, bei dem eine Zeitverzögerung durch die Vorverarbeitungsschaltungsanordnung (7) und eine Zeitverzögerung durch die Verzögerungsschaltungsanordnung variabel sind.

4. System nach Anspruch 3, das darüber hinaus Mittel umfaßt, die einen Teil der Verzögerungsschaltungsanordnung (9) bilden, die durch die Vorverarbeitungsschaltungsanordnung (7) eingebrachte Zeitverzögerung überwachen und die Verzögerung in der Verzögerungsschaltungsanordnung (9) entsprechend der überwachten Zeitverzögerung durch die Vorverarbeitungsschaltungsanordnung einstellen.

5. Verfahren zum Berücksichtigen von Verarbeitungsverzögerungen in einer Basisstation eines Funktelefonnetzes mit den Schritten:
es werden Datenblöcke während aufeinanderfolgender Rahmen an einer Basisstation eines Telekommunikationssystems empfangen, wobei jeder Rahmen eine vorherbestimmte Rahmendauer aufweist und in mehrere Abschnitte von vorherbestimmter Dauer unterteilt ist, und wobei die Basisstation eine Antenne (5), eine Basisstation-Elektronik (11) und eine Vorverarbeitungsschaltungsanordnung (7) aufweist, die zwischen der Antenne und der Basisstation-Elektronik sitzt,
es wird die durch die Vorverarbeitungsschaltungsanordnung eingebrachte Verzögerung gemessen; und
es wird das Komplement einer gesamten durch die Verzögerungsschaltungsanordnung (7) eingebrachten Zeitverzögerung der Datenblöcke geliefert, so daß die gesamte in der Vorverarbeitungs- und der Verzögerungsschaltungsanordnung erfolgende Zeitverzögerung einem ganzzahligen Vielfachen der vorherbestimmten Rahmendauer entspricht.

6. Verfahren nach Anspruch 5, bei dem eine Zeitverzögerung durch die Vorverarbeitungsschaltungsanordnung (7) und das Komplement festgelegt sind.

7. Verfahren nach Anspruch 5, bei dem eine Zeitverzögerung durch die Vorverarbeitungsschaltungsanordnung (7) und das Komplement variabel sind.

8. Verfahren nach Anspruch 7, das darüber hinaus den Schritt des Überwachens der durch die Vorverarbeitungsschaltungsanordnung eingebrachten Verzögerung und das Einstellen des Komplements entsprechend der überwachten durch die Vorverarbeitungsschaltungsanordnung eingebrachten Verzögerung umfaßt.

9. Verfahren nach Anspruch 5, 7 oder 8, bei dem der Schritt des Bestimmens der Verzögerung die Schritte des Vorsehens einer Schaltung mit variabler Verzögerung, des Bestimmens der durch die Vorverarbeitungsschaltungsanordnung eingebrachten Verzögerung und das Einstellen der Verzögerung der Schaltung mit variabler Verzögerung entsprechend der durch die Vorverarbeitungsschaltungsanordnung eingebrachten Verzögerung umfaßt.

## Revendications

1. Système de télécommunication comprenant :
une station de base agencée pour recevoir des salves de données au cours de trames consécutives, chacune desdites trames ayant une période de trame prédéterminée, chacune desdites trames étant divisée en une pluralité de parties de période prédéterminée, ladite station de base comportant une antenne (5), des systèmes électroniques (11) de station de base et un circuit de pré-traitement (7) disposé entre ladite antenne de la station de base et lesdits systèmes électroniques de la station de base ;
un circuit à retard (9) couplé entre ledit circuit de pré-traitement (7) et lesdits systèmes électroniques (11) de la station de base, ledit circuit à retard étant agencé pour fournir le complément d'un retard total auxdites salves de données par l'intermédiaire dudit circuit de pré-traitement (7), de telle sorte que le retard total dans ledit circuit de pré-traitement (7) en plus dudit circuit à retard (9) est égal à un nombre entier de ladite période prédéterminée d'une trame.

2. Système selon la revendication 1, dans lequel le retard dudit circuit de pré-traitement (7) est fixe et le retard dudit circuit à retard est fixe.

3. Système selon la revendication 1, dans lequel le retard dudit circuit de pré-traitement (7) est variable et le retard dudit circuit à retard est variable.

4. Système selon la revendication 3, comprenant en outre un moyen formant une partie dudit circuit à retard (9) pour surveiller le retard fourni par ledit circuit de pré-traitement (7) et pour régler le retard dans ledit circuit à retard (9) en fonction du retard surveillé dans ledit circuit de pré-traitement.

5. Procédé pour adapter des retards de traitement dans une station de base cellulaire comprenant les étapes de :
réception de salves de données au cours de trames consécutives à une station de base d'un système de télécommunication, chacune desdites trames ayant une période de trame prédéterminée, chacune desdites trames étant divisée en une pluralité de parties de période prédéterminée, ladite station de base comportant une antenne (5), des systèmes électroniques (11) de station de base et un circuit de pré-traitement (7) disposé entre ladite antenne de station de base et lesdits systèmes électroniques de station de base ;
détermination du retard introduit par ledit circuit de pré-traitement ; et
fourniture du complément du retard total auxdites salves de données par l'intermédiaire dudit circuit de pré-traitement, de telle sorte que le retard total en provenance dudit circuit de pré-traitement en plus du circuit à retard est égal à un nombre entier de ladite période prédéterminée d'une trame.

6. Procédé selon la revendication 5, dans lequel le retard dudit circuit de pré-traitement est fixe et ledit complément est fixe.

7. Procédé selon la revendication 5, dans lequel le retard dudit circuit de pré-traitement est variable et ledit complément est variable.

8. Procédé selon la revendication 7, comprenant en outre l'étape de surveillance du retard fourni par ledit circuit de traitement et de réglage dudit complément en fonction du retard surveillé dans ledit circuit de pré-traitement.

9. Procédé selon la revendication 5 ou la revendication 7 ou la revendication 8, dans lequel ladite étape de détermination dudit retard comprend les étapes de fourniture d'un circuit à retard variable, de détermination du retard dudit circuit de pré-traitement et d'établissement du retard dudit circuit à retard variable en réponse à la détermination du retard dudit circuit de pré-traitement.
